(19) Europäisches Patentamt
European Patent Office
Office européen des brevets

(11) **EP 2 093 104 A1**

(12) **DEMANDE DE BREVET EUROPEEN**

(43) Date de publication:
**26.08.2009 Bulletin 2009/35**

(51) Int Cl.:
*B60Q 1/14* (2006.01)     *F21V 14/08* (2006.01)
*H05B 37/02* (2006.01)     *H05B 39/04* (2006.01)

(21) Numéro de dépôt: **09152641.8**

(22) Date de dépôt: **12.02.2009**

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**
Etats d'extension désignés:
**AL BA RS**

(30) Priorité: **22.02.2008   FR 0800987**

(71) Demandeur: **VALEO VISION
93012 Bobigny (FR)**

(72) Inventeurs:
• **Le Bars, Jean-François
89275 Elchingen (DE)**
• **Pauty, Etienne
75019 Paris (FR)**

(54) **Procédé d'alimentation d'une lampe de projecteur automobile et projecteur mettant en oeuvre ce procédé**

(57)     L'invention concerne un procédé d'alimentation d'une source lumineuse de projecteur automobile bi-mode apte à fournir alternativement un éclairage en mode route et un éclairage en mode code, dans lequel la source lumineuse est alimentée électriquement avec une première tension lorsqu'elle est en mode route et avec une seconde tension lorsqu'elle est en mode code, la seconde tension étant inférieure à la première tension.

Elle concerne également un projecteur d'éclairage pour véhicule automobile, comportant :
- une source lumineuse générant un faisceau lumineux,
- un cache amovible, et
- des moyens d'alimentation en tension de la source lumineuse, aptes à générer alternativement une première tension lorsque le projecteur est en mode route et une seconde tension, inférieure à la première tension, lorsque le projecteur est en mode code.

| $V_{Route}$ \ $V_{Code}$ | "0" | "1" |
|---|---|---|
| "0" | $V_{Lampe} = 0$ | $V_{Lampe} = V_{PWM_C}$ |
| "1" | $V_{Lampe} = V_{Alim}$ ou $V_{PWM_R}$ | N.A |

**Fig. 4C**

EP 2 093 104 A1

**Description**

L'invention concerne un procédé pour alimenter électriquement une lampe de projecteur automobile de façon à ce que cette lampe ait à la fois une luminance et une durée de vie suffisantes pour être installée dans un véhicule automobile. L'invention concerne également un projecteur d'éclairage pour véhicule automobile, dans lequel ce procédé est mis en oeuvre.

L'invention trouve des applications dans le domaine de l'éclairage pour véhicule automobile et, en particulier, dans le domaine de l'alimentation électrique des lampes dans les projecteurs d'éclairage des véhicules.

Dans le domaine de l'éclairage automobile, il existe différents types de dispositifs de projection de lumière parmi lesquels on trouve essentiellement :

- des feux de position, d'intensité et de portée faible ;
- des feux de croisement, ou codes, d'intensité plus forte et de portée sur la route avoisinant 70 mètres, utilisés essentiellement la nuit et dont la répartition du faisceau lumineux est étudiée pour ne pas éblouir le conducteur d'un véhicule venant en sens inverse ;
- des feux de route, avec une longue portée avoisinant les 200 mètres, qui sont utilisés pour éclairer la route au loin et permettre au conducteur d'appréhender la trajectoire du véhicule ;
- des feux anti-brouillard.

Actuellement, il existe des dispositifs de projection de lumière, ou projecteurs, qui assurent à la fois la fonction de code et la fonction route. Ces projecteurs sont appelés projecteurs bi-fonctions ou bi-modes. Ils assurent alternativement un éclairage en mode code et un éclairage en mode route. Un tel projecteur bi-fonction comporte une source lumineuse émettant un éclairage identique quel que soit le mode de fonctionnement (route ou code). Il comporte généralement un cache amovible apte à assurer une coupure du faisceau lumineux. Ce cache est, par exemple, un volet métallique pouvant être dans une première position ou une deuxième position. Dans la première position, le cache n'occulte pas le faisceau lumineux produit par la source lumineuse, ou lampe, du projecteur. Dans la seconde position, le cache occulte partiellement le faisceau lumineux produit par la lampe du projecteur. Dans cette seconde position, on dit que le cache réalise une coupure spécifique du faisceau lumineux, cette coupure spécifique correspond à la coupure du faisceau lumineux nécessaire pour obtenir la fonction code. Ainsi, l'éclairage en mode code ou en mode route se différencie par la présence ou non de la coupure.

Dans la plupart des projecteurs bi-fonctions, le cache amovible est pivotant. Il peut ainsi prendre les deux positions citées précédemment, à savoir :

- la seconde position, appelée position d'occultation, dans laquelle il assure la coupure du faisceau lumineux, générant ainsi la fonction d'éclairage code, et
- la première position, appelée position neutre, dans laquelle le cache n'occulte pas le faisceau lumineux, générant alors la fonction d'éclairage de route, ou fonction route.

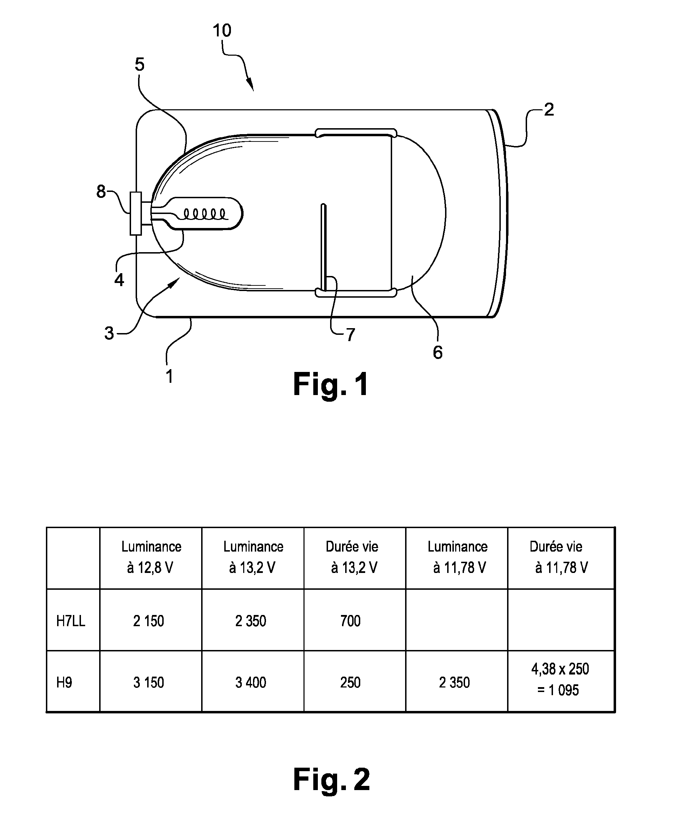

Sur la figure 1, on a représenté un exemple de projecteur de véhicule automobile. Ce projecteur 10 comporte généralement d'un boîtier 1 fermé par une glace de protection 2. Le projecteur 10 comporte, à l'intérieur du boîtier, un module d'éclairage 3, par exemple un module elliptique. Le module d'éclairage 3 comporte, notamment, une source lumineuse 4, appelée aussi lampe, un réflecteur 5 apte à réfléchir la lumière vers la glace de protection, une lentille 6 apte à diffuser la lumière, un cache amovible 7 et des moyens d'alimentation 8 de la source lumineuse.

Dans les projecteurs bi-fonctions actuels, la source lumineuse peut être une source lumineuse halogène. Cette source lumineuse halogène est généralement alimentée par une tension fixe, qui dépend de la source lumineuse utilisée, du véhicule dans lequel la source lumineuse est montée et/ou du pays dans lequel le véhicule va être vendu. Cette tension fixe est généralement la tension nominale de la source lumineuse. En effet, une tension nominale est spécifiée, par les fabricants de lampes, pour chaque type de source lumineuse. Cette tension nominale est la tension d'alimentation pour laquelle le fonctionnement de la source lumineuse est optimal.

Pour permettre au projecteur d'éclairer correctement la scène de route située à l'avant du véhicule, une source lumineuse doit avoir de bonnes performances, c'est-à-dire une forte puissance. La performance d'une source lumineuse est caractérisée principalement par son flux et par sa luminance. Ces performances, flux et luminances sont fonctions de la tension aux bornes de la source lumineuse. Ainsi, plus la tension aux bornes de la source lumineuse est élevée et plus le flux et la luminance sont élevés. A titre d'exemple, en considérant la luminance : pour une lampe du type H9 standard, la luminance est de l'ordre de 3400 cd/cm$^2$ pour une tension nominale aux bornes de la lampe de 13,2 Volts et de 3150 cd/cm$^2$ pour une tension de 12,8 Volts.

Or, il est connu de l'homme de l'art que plus la tension aux bornes de la lampe est élevée, plus la durée de vie de ladite lampe est faible. Autrement dit, l'amélioration de la luminance se fait au détriment de la durée de vie de la lampe. Par exemple, avec une tension de 11.78 Volts, une lampe H9 a une durée de vie d'environ 4,4 fois supérieure à celle correspondant à sa tension nominale de 13,2 Volts, qui est, dans ce cas, de l'ordre de 250 heures

Il est donc difficile, actuellement, de trouver un compromis entre performance et durée de vie. Les constructeurs automobiles doivent choisir, pour équiper un véhicule, entre une lampe à longue durée de vie et une lampe à luminance élevée. Ils doivent donc choisir entre deux types de lampe :

- une lampe à longue durée de vie, telle qu'une lampe H7 Long Life, qui offre une performance moyenne, avec une luminance de l'ordre de 2350 cd/cm$^2$, et une durée de vie longue (de l'ordre de 700 heures). Une telle lampe a l'inconvénient d'offrir un éclairage peu puissant, essentiellement en fonction route pour laquelle la luminance a un rôle très important. Ou

- une lampe très performante, telle qu'une lampe H9, qui offre une très bonne luminance (de l'ordre de 3400 cd/cm$^2$) mais une durée de vie courte (de l'ordre de 250 heures). Une telle lampe présente l'inconvénient de devoir être changée fréquemment, ce qui entraîne bien sûr un coût supplémentaire pour le propriétaire du véhicule. La durée de vie d'une telle lampe peut être améliorée en diminuant la tension aux bornes de la lampe. Avec une tension d'alimentation, par exemple de 11,78 Volts, la durée de vie de la lampe est d'environ 1095 heures, mais sa luminance baisse à 2350 cd/cm$^2$, ce qui correspond à la luminance d'une lampe H7 Long Life. Une telle lampe avec une tension d'alimentation diminuée présente donc les mêmes performances de puissance qu'une lampe H7 Long Life.

Pour résoudre les inconvénients des techniques exposées précédemment, l'invention propose un procédé dans lequel on applique une tension d'alimentation différente, aux bornes de la source lumineuse, selon le mode de fonctionnement dans lequel se trouve le projecteur. Plus précisément, lorsque le projecteur est en mode route, la source lumineuse est alimentée avec une tension proche de la tension nominale de ladite source lumineuse et, lorsque le projecteur est en mode code, une tension strictement inférieure à la tension nominale est appliquée aux bornes de la source lumineuse.

De façon plus précise, l'invention concerne un procédé d'alimentation d'une source lumineuse de projecteur automobile bi modes apte à fournir alternativement un éclairage en mode route et un éclairage en mode code, **caractérisé en ce que** la source lumineuse est alimentée électriquement avec une première tension lorsqu'elle est en mode route et avec une seconde tension lorsqu'elle est en mode code, la seconde tension étant inférieure à la première tension.

Ainsi, comme la proportion de fonctionnement d'un projecteur en mode route est nettement inférieure à celle du fonctionnement en mode code d'une part, la durée de vie de la source lumineuse est augmentée par rapport à un fonctionnement complet à tension nominale et, d'autre part, la puissance de la source lumineuse en mode route est améliorée.

Le procédé de l'invention peut comporter une ou plusieurs des caractéristiques suivantes :

- la première tension à une valeur proche ou égale à une tension nominale de la source lumineuse.
- la seconde tension est strictement inférieure à la tension nominale de la source lumineuse.
- la première et la seconde tensions sont des signaux modulés en largeur PWM.
- le signal PWM correspondant à chaque tension est commandé par un contrôleur d'éclairage.
- le signal PWM correspondant à chaque tension est commandé par une carte électronique de régulation implantée dans le projecteur.

L'invention concerne également un projecteur d'éclairage pour véhicule automobile, comportant :

- une source lumineuse associée à un module d'éclairage générant un faisceau lumineux,
- un cache amovible, et
- des moyens d'alimentation en tension de la source lumineuse,

**caractérisé en ce que** les moyens d'alimentation sont aptes à générer alternativement une première tension lorsque le projecteur est en mode route et une seconde tension, inférieure à la première tension, lorsque le projecteur est en mode code.

Le projecteur de l'invention peut comporter une ou plusieurs des caractéristiques suivantes :

- les moyens d'alimentation de la source lumineuse consistent en un contrôleur d'éclairage.
- les moyens d'alimentation de la source lumineuse comportent un contrôleur d'éclairage associé à une carte électronique de régulation implantée dans le projecteur.
- la carte électronique comporte un composant MOS intelligent et/ou d'autres composants identiques capables d'assurer la fonction de régulation de la tension.
- les moyens d'alimentation de la source lumineuse comportent un contrôleur d'éclairage associé à une carte électronique de régulation implantée dans le projecteur, ladite carte pouvant être commandée par des signaux logiques et/ou des messages transitant sous forme numérique sur un bus.
- les moyens d'alimentation de la source lumineuse comportent un contrôleur d'éclairage associé à une carte électronique de régulation implantée dans le projecteur, ladite carte pouvant être commandée par des messages transitant sous forme numérique sur un bus autorisant une modification dynamique des première et seconde tensions aux bornes de la source lumineuse en fonction de différents profils de mission.

L'invention concerne en outre un véhicule comportant un projecteur tel que décrit précédemment.

L'invention va maintenant être décrite, de façon non limitative, en relation avec les dessins suivants :

- la figure 1, déjà décrite, représente schématiquement un projecteur de véhicule automobile classique;
- la figure 2 représente un tableau regroupant des exemples de valeurs de luminance et de durée de vie pour deux types de source lumineuse ;
- la figure 3 représente schématiquement un premier moyen d'alimentation électrique de la source lumineuse selon l'invention ; et
- les figures 4A, 4B, 4C et 4D représentent schématiquement différents moyens d'alimentation électrique de la source lumineuse selon l'invention.

L'invention concerne un procédé pour alimenter la source lumineuse d'un projecteur de véhicule automobile différemment selon le mode de fonctionnement du projecteur. En particulier, l'invention propose d'alimenter la source lumineuse avec une tension dont la valeur est proche de la tension nominale indiquée par le fabricant de la source lumineuse, lorsque le projecteur est en mode route. Cette tension peut être cependant choisie différente de la tension nominale du constructeur par le fabricant automobile en fonction des performances et/ou durée de vie qu'il souhaite pour sa fonction d'éclairage. L'invention propose, en outre, d'alimenter la source lumineuse avec une tension strictement inférieure à la tension nominale, lorsque le projecteur est en mode code. Ainsi, dans l'invention, l'éclairage en mode route et l'éclairage en mode code se différencient, non seulement par la présence ou non de la coupure, mais aussi par la luminance du faisceau lumineux émis par la source lumineuse.

On parlera, dans la suite de la description, indifféremment des modes route et code du projecteur et des modes route et code de la source lumineuse, étant entendu que la source lumineuse est nécessairement dans le même mode que le projecteur.

Il a été constaté, dans le domaine de l'éclairage automobile, qu'un projecteur fonctionne environ 95% du temps où il est en fonctionnement, en mode code, c'est-à-dire dans le mode où les feux de croisement sont allumés.

En mode code, il nécessaire que le projecteur garantisse un éclairage suffisant vis-à-vis des nécessités de sécurité et des exigences réglementaires. Les dispositifs existant actuellement et considérés comme honorables sont développés pour obtenir de telles performances pendant une longue durée de vie en utilisant des lampes de type H7 Long Life (nommée H7LL) ou de performances et durée de vie du même ordre de grandeur.

Le projecteur fonctionne seulement 5% de son temps en mode route, c'est-à-dire dans le mode où les feux de route sont allumés. Or, c'est en mode route qu'il est nécessaire, pour le conducteur, que le projecteur fournisse un éclairage puissant, c'est-à-dire que la source lumineuse ait une performance élevée. Par conséquence, la source lumineuse doit avoir une luminance élevée pendant seulement 5% de son temps de fonctionnement.

En tenant compte de cette constatation ainsi que de la relation expliquée précédemment entre la valeur de la tension et le niveau de luminance d'une source lumineuse, l'invention propose d'alimenter la source lumineuse du projecteur avec une tension proche de la tension nominale pendant les 5% de temps où elle fonctionne en mode route et d'alimenter ladite source lumineuse avec une tension réduite pendant les 95% du temps où la source lumineuse fonctionne en mode code.

On appelle tension nominale, la tension fournie par le fabricant de la source lumineuse et considérée comme offrant un fonctionnement optimal de la source lumineuse. Dans l'invention, la tension appliquée lorsque la source lumineuse est en mode route peut être la tension nominale. Cette tension peut également être une tension sensiblement inférieure, ou supérieure, à la tension nominale. En effet, dans l'invention, la tension appliquée lorsque la source lumineuse est en mode route est une tension d'une valeur suffisante pour que la luminance de la source lumineuse atteigne un niveau choisi par le constructeur automobile. Dans la suite de la description, le terme « tension nominale » sera compris comme étant une tension proche ou égale à la tension nominale.

Sur la figure 2, on a représenté un tableau regroupant des exemples de luminance et de durée de vie pour différents types de lampes, à différents niveaux de tension. Ce tableau montre, en particulier, les luminances et les durées de vie d'une lampe H7LL et d'une lampe H9. Avec une tension aux bornes de la lampe de 12,8 Volts, une lampe H7LL a une luminance de 2150 cd/cm$^2$ et une lampe H9 a une luminance de 3150 cd/cm$^2$. Lorsque la tension monte à 13,2 Volts, la luminance de H7LL passe à 2350 cd/cm$^2$ et celle de H9 à 3400 cd/cm$^2$. Dans ce cas, la durée de vie de H7LL est de 700 heures et celle de H9 de 250 heures.

Si l'on réduit la tension d'alimentation de la lampe H9 à 11,78 Volts, la luminance de H9 passe à 2350 cd/cm$^2$, ce qui correspond à la luminance d'une lampe H7LL alimentée à 13,2V. Par contre, la durée de vie de H9 passe à 1095 heures, ce qui est même légèrement supérieur à la durée de vie d'une lampe H7LL. On comprend donc que, avec le procédé de l'invention, la lampe H9 a des performances et une durée de vie au moins identiques à celles d'une lampe H7LL, lorsque la lampe est en mode code, c'est-à-dire pendant 95% du temps. Par contre, la lampe H9 conserve ses performances initiales, à savoir des performances élevées, lorsqu'elle est en mode route, c'est-à-dire pendant 5% du temps. On comprend que, sur toute la durée de fonctionnement d'une lampe H9, c'est-à-dire sur 100% du temps, la durée de vie d'une lampe est nettement améliorée.

Dans la description qui précède, la tension d'alimentation de 11,78 Volts correspond au mode de réalisation préféré de l'invention. Cette tension d'alimentation a été déterminée de façon à obtenir, avec une lampe H9 sous wattée (c'est-à-dire recevant à ses bornes une tension d'alimentation réduite), la même luminance qu'une lampe H7LL à 13,2V. Il est connu, en effet, dans le domaine de l'éclairage automobile, que la performance de la lampe varie en puissance 3,25 de la tension à ses bornes. La tension réduite V de H9 a donc été déterminée à partir de la luminance et de la tension aux bornes de H7LL, comme suit :

$$\left(\frac{V}{13,2}\right)^{3,25} = \frac{2350}{3400}$$

d"où

$$3,25 \, Ln\frac{V}{13,2} = Ln\frac{2350}{3400}$$

$$Ln\frac{V}{13,2} = \frac{1}{3,25} \times Ln\frac{2350}{3400}$$

$$\frac{V}{13,2} = e^{\frac{1}{3,25} \times Ln\frac{2350}{3400}}$$

$$V = 13,2 \times e^{\frac{1}{3,25} \times Ln\frac{2350}{3400}}$$

$$V = 11,78$$

Il est connu, par ailleurs, que la durée de vie de la lampe varie, en puissance 13, en fonction de la tension à ses bornes. On peut ainsi déterminer la durée de vie D de la lampe H9 selon le procédé de l'invention :

$$D = \left(\frac{13,2}{11,78}\right)^{13} = 4,38 \, I$$

Dans le cas d'une lampe H9, pour une tension nominale de 13,2V, la durée de vie est la suivante :

- H9 dure 250 heures à 13,2V
- H9 fonctionne 5% du temps à 13,2V
- Il reste donc 250 - 5% = 250 - 12,5 = 237,5 heures de fonctionnement à tension nominale,
- Ce qui équivaut à 237,5 x 4,38 ≈ 1040 heures en tension réduite.

La lampe H9 a ainsi une durée de vie totale de 1040 + 12,5 = 1052,5 heures avec des performances multipliées par environ 1,4 par rapport à une lampe halogène classique telle qu'une lampe H7LL.

Avec un tel procédé d'alimentation d'une lampe H9, il est possible d'obtenir un projecteur offrant un éclairement maximum de l'ordre de 80 Lux pour le feu de route et de l'ordre de 45 Lux pour le feu de croisement.

Le procédé de l'invention qui vient d'être décrit peut être mis en oeuvre dans un projecteur de véhicule automobile tel que celui représenté sur la figure 1. Selon l'invention, les moyens d'alimentation 8 sont aptes à fournir alternativement une tension nominale de la source lumineuse et une tension réduite, en fonction du mode de fonctionnement dans lequel se trouve le projecteur (mode code ou mode route). En particulier, les moyens d'alimentation 8 sont aptes à fournir une première tension proche ou égale à la tension nominale de la source lumineuse lorsque ladite source lumineuse est en mode route ; ils sont aptes également à fournir une tension réduite, d'une valeur prédéfinie par le constructeur automobile, lorsque la source lumineuse est en mode code.

Pour cela, les moyens d'alimentation 8 du projecteur peuvent consister en un contrôleur d'éclairage situé à l'extérieur du projecteur et qui peut être intégré le cas échéant dans un autre boîtier électronique tel que le « body controler », pour piloter la puissance des lampes du véhicule. Dans ce cas, la source lumineuse est alimentée directement par le contrôleur d'éclairage du véhicule, avec un signal modulé en durée, appelé PWM (Pulse Width Modulation, en termes anglo-saxons). En mode code, le contrôleur d'éclairage alimente la source lumineuse avec un signal PWM pour réguler la tension moyenne aux bornes de la source lumineuse à la valeur de la tension réduite prédéfinie, par exemple 11,78V. En mode route, le contrôleur d'éclairage alimente la source lumineuse avec un signal PWM pour réguler la tension moyenne aux bornes de la source lumineuse à la valeur de la tension nominale, par exemple 13,2V. Le signal PWM est un signal binaire qui peut soit être égal à 1, ce qui signifie que 100% du courant circule, soit à 0, ce qui signifie que 0% du courant circule.

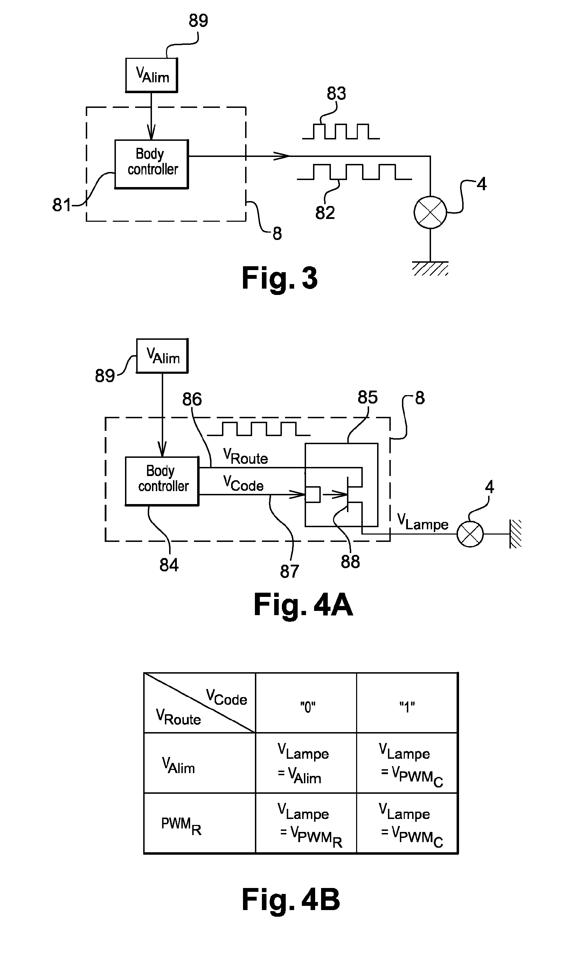

Sur la figure 3, on a représenté un exemple d'un circuit électronique correspondant au premier mode de réalisation des moyens d'alimentation 8. Sur cette figure, les moyens d'alimentation 8 consistent en un contrôleur d'éclairage 81 qui génère un premier signal 82, appelé $PWM_R$ et un second signal 83, appelé $PWM_C$, à destination de la source lumineuse 4. Le premier signal 82 a une première largeur d'impulsion correspondant à la tension proche de la tension nominale. Ce premier signal 82 est généré lorsque le projecteur est en mode route. Le contrôleur d'éclairage 81 génère, en alternative, un second signal 83 ayant une seconde largeur d'impulsion correspondant à la tension réduite. Ce second signal 83 est généré lorsque le projecteur est en mode code.

Ainsi, en mode route, la source lumineuse 4 est alimentée par la tension d'alimentation $V_{ALIM}$ du contrôleur d'éclairage modulée en largeur avec le rapport $PWM_R$ (Pour le cas où le facteur $PWM_R$ est égal à 1, la source lumineuse est alimentée directement par la tension $V_{ALIM}$ 89). En mode code, la source lumineuse 4 est alimentée par la tension d'alimentation $V_{ALIM}$ du contrôleur d'éclairage modulée en largeur avec le rapport $PWM_C$. Le rapport cyclique du signal $PWM_R$ est supérieur à celui du signal $PWM_C$, c'est-à-dire que : Tension efficace ($PWM_R$) > Tension efficace ($PWM_C$).

Le constructeur automobile peut alors choisir les valeurs des tensions qu'il veut réguler, en fonction du profil de mission du véhicule. Il peut ainsi décider d'alimenter différemment les lampes des véhicules selon les pays et les exigences de durée de vie et/ou de luminance. Dans ce mode de réalisation, les valeurs des tensions sont programmées directement dans le logiciel du contrôleur d'éclairage.

Dans un deuxième mode de réalisation du projecteur, la régulation de la tension est réalisée par une carte électronique de régulation du signal PWM dans la source lumineuse. Cette carte, située dans le projecteur, peut être séparée ou faire partie d'un contrôleur d'éclairage intelligent interne au projecteur dans le cas où d'autres fonctions sont requises (par exemple pour des éclairages de jour et/ou indicateurs de direction à leds ou pour le cas de dispositifs « à phares tournants »).

Sur la figure 4A, on a représenté un premier exemple de circuit électronique correspondant au deuxième mode de réalisation des moyens d'alimentation 8. Sur cette figure 4A, les moyens d'alimentation 8 comportent un contrôleur d'éclairage externe au projecteur 84 qui génère un premier signal 86, appelé $V_{ROUTE}$ et un second signal 87, appelé $V_{CODE}$. Le signal $V_{ROUTE}$ est un signal issu directement de la tension VAlim modulée par le signal PWM (PWM peut être le cas échéant égal à 1), le signal $V_{CODE}$ est quant à lui un signal binaire qui peut prendre la valeur 0 ou 1.

Les signaux $V_{ROUTE}$ et $V_{CODE}$ sont transmis à la carte électronique 85. Cette carte électronique 85 est implantée dans le projecteur. Cette carte électronique 85 comporte, notamment, un composant MOS intelligent, par exemple un Smart MOS 88, ayant la particularité de découper le courant qui circule dans la source lumineuse pour fournir un signal PWM.

Les différents cas qui peuvent se présenter, en fonction des valeurs de $V_{ROUTE}$ et $V_{CODE}$, sont regroupés dans le tableau de la figure 4B. En mode route, c'est-à-dire lorsque le signal code $V_{CODE}$ est à 0, deux cas sont possibles :

- soit le circuit laisse passer toute la tension d'alimentation $V_{ALIM}$ 89 dans la source lumineuse 4, ce qui équivaut à un signal PWM à 1 ; la tension $V_{LAMPE}$ aux bornes de la source lumineuse 4 est alors égale à $V_{ALIM}$;
- soit le circuit dispose d'une régulation intrinsèque qui module le courant d'alimentation à un taux de modulation PWM prédéfini, c'est-à-dire à $PWM_R$; la tension $V_{LAMPE}$ aux bornes de la source lumineuse 4 est alors égale à $V_{PWMR}$

En mode code, le signal $V_{CODE}$ est à 1. Le circuit peut alors fonctionner des deux façons suivantes :

- lorsque $PWM_R$ est à 1, le circuit génère un signal PWM fixe qui module le courant de la source lumineuse ; la tension $V_{LAMPE}$ aux bornes de la source lumineuse 4 est alors égale à la tension du signal $PWM_C$, $V_{PWMC}$;
- lorsque $PWM_R$ est différent de 1, le circuit génère un signal PWM qui se synchronise sur un des flans du signal modulé d'alimentation et regénère un signal de facteur PWM différent qui fait baisser la tension efficace aux bornes de la source lumineuse ; la tension $V_{LAMPE}$ aux bornes de la source lumineuse 4 est alors égale à la tension du signal $PWM_C$, $V_{PWMC}$.

Comme précédemment, dans ce mode deuxième mode de réalisation, le constructeur automobile peut choisir les valeurs des tensions qu'il veut réguler, en fonction du profil de mission du véhicule. Par contre, dans ce mode de réalisation, les valeurs des tensions doivent être prévues lors de l'implantation de la carte électronique.

Dans un troisième mode de réalisation, les ordres relatifs aux modes de fonctionnement Code et Route peuvent être envoyés sous forme de messages binaires 0 ou 1 (dans ce cas il y a 2 entrées de commandes) sous forme de messages transitant sur un bus, par exemple sous protocole LIN ou CAN.

La carte électronique 90, dans le projecteur 10, comporte, dans ce cas, un dispositif logique 91, par exemple à base de microcontrôleur, capable de décrypter les messages et piloter en conséquence la partie relative à la commande PWM de la source lumineuse.

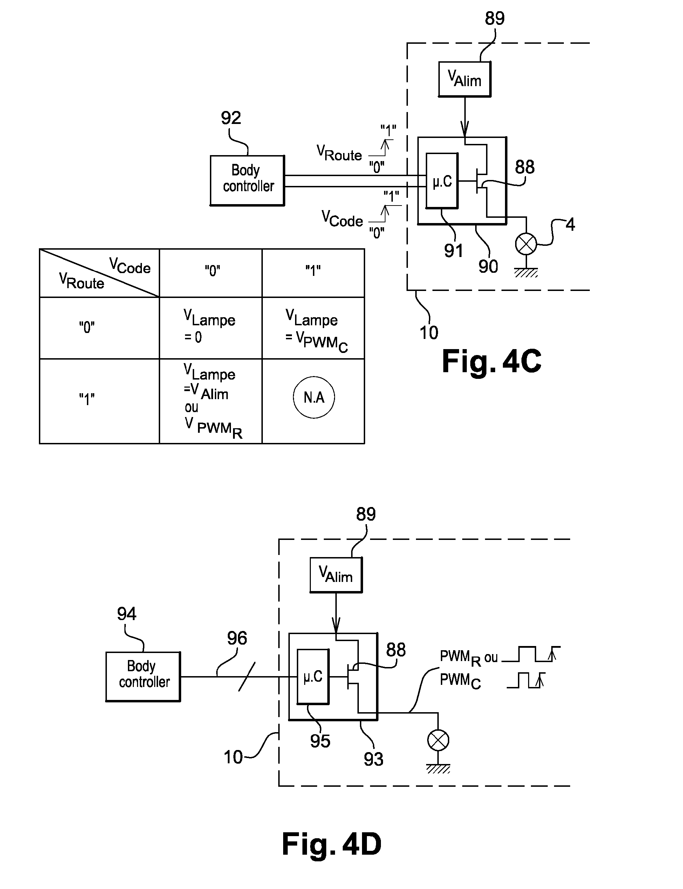

Dans le cas de la figure 4C, les signaux Code et Route issus du contrôleur d'éclairage 92, externe au projecteur, sont binaires ; la logique de commande de la source lumineuse est décrite dans le tableau de la figure 4C :

VRoute =0, V Code =0 - aucun courant ne circule dans la source lumineuse

VRoute= 1, V Code =1 -aucun courant ne circule dans la source lumineuse

VRoute= 1, V Code =0 - Mode route

- soit le circuit laisse passer tout le courant d'alimentation $V_{ALIM}$ 89 dans la source lumineuse 4, ce qui équivaut à un signal PWM à 1 ; la tension $V_{LAMPE}$ aux bornes de la source lumineuse 4 est alors égale à $V_{ALIM}$

- soit le circuit dispose d'une régulation intrinsèque qui module le courant d'alimentation à un taux de modulation PWM prédéfini, c'est-à-dire à $PWM_R$; la tension $V_{LAMPE}$ aux bornes de la source lumineuse 4 est alors égale à $V_{PWMR}$

VRoute= 0, V Code =1 - Mode code

Le circuit peut alors fonctionner des deux façons suivantes :

- lorsque $PWM_R$ est à 1, le circuit génère un signal PWM fixe qui module le courant de la source lumineuse ; la tension $V_{LAMPE}$ aux bornes de la source lumineuse 4 est alors égale à la tension du signal $PWM_C$, $V_{PWMC}$;
- lorsque $PWM_R$ est différent de 1, le circuit génère un signal PWM qui se synchronise sur un des flans du signal modulé d'alimentation et régénère un signal de facteur PWM différent qui fait baisser la tension efficace aux bornes de la source lumineuse ; la tension $V_{LAMPE}$ aux bornes de la source lumineuse 4 est alors égale à la tension du signal $PWM_C$, $V_{PWMC}$.

Comme précédemment, dans ce troisième mode de réalisation, le constructeur automobile peut choisir les valeurs des tensions qu'il veut réguler, en fonction du profil de mission du véhicule. Dans ce mode de réalisation, les valeurs des tensions doivent aussi être prévues lors de l'implantation de la carte électronique.

Dans un quatrième mode de réalisation, les ordres relatifs aux modes de fonctionnement Code et Route peuvent être envoyés sous forme de messages transitant sur un bus 96, par exemple sous protocole LIN ou CAN.

La carte électronique 93, dans le projecteur 10, comporte alors un dispositif logique 95, souvent à base de microcontrôleur, capable de décrypter les messages et piloter en conséquence la partie relative à la commande PWM de la source lumineuse.

Dans le cas de la figure 4D, les signaux Code et Route issus du contrôleur d'éclairage sont des messages codés sous le protocole imposé du constructeur. La programmation du microcontrôleur 95 associée à l'électronique de commande de la carte permet de piloter les lampes selon les modes code et route avec les facteurs $PWM_r$ et $PWM_c$ adéquats.

Dans ce mode de réalisation, les valeurs des tensions (les valeurs de rapports PWM) peuvent être variables et pilotées selon le besoin directement par le body controler en fonction du profil souhaité par le constructeur.

## Revendications

1. Procédé d'alimentation d'une source lumineuse de projecteur automobile bi-mode apte à fournir alternativement un éclairage en mode route et un éclairage en mode code,
**caractérisé en ce que** la source lumineuse (4) est alimentée électriquement avec une première tension (82, 86) lorsqu'elle est en mode route et avec une seconde tension (83, 87) lorsqu'elle est en mode code, la seconde tension étant inférieure à la première tension.

2. Procédé d'alimentation selon la revendication 1, **caractérisé en ce que** la première tension a une valeur proche ou égale à une tension nominale de la source lumineuse.

3. Procédé d'alimentation selon la revendication 2, **caractérisé en ce que** la seconde tension est strictement inférieure à la tension nominale de la source lumineuse.

4. Procédé d'alimentation selon l'une quelconque des revendications 1 à 3, **caractérisé en ce que** la première et la seconde tensions sont des signaux modulés en largeur (PWM).

5. Procédé d'alimentation selon la revendication 4, **caractérisé en ce que** le signal PWM correspondant à chaque tension (83, 82) est commandé par un contrôleur d'éclairage (81).

6. Procédé d'alimentation selon la revendication 4, **caractérisé en ce que** le signal PWM correspondant à chaque tension (86, 87) est commandé par une carte électronique de régulation (85) implantée dans le projecteur.

7. Projecteur d'éclairage (10) pour véhicule automobile, comportant :

   - une source lumineuse (4) associée à un module d'éclairage (3) générant un faisceau lumineux,
   - un cache amovible (7), et
   - des moyens (8) d'alimentation en tension de la source lumineuse,

   **caractérisé en ce que** les moyens d'alimentation sont aptes à générer alternativement une première tension (82, 86) lorsque le projecteur est en mode route et une seconde tension (83, 87), inférieure à la première tension, lorsque le projecteur est en mode code.

8. Projecteur selon la revendication 7, **caractérisé en ce que** les moyens (8) d'alimentation de la source lumineuse consistent en un contrôleur d'éclairage (81).

9. Projecteur selon la revendication 7, **caractérisé en ce que** les moyens (8) d'alimentation de la source lumineuse comportent un contrôleur d'éclairage (84) associé à une carte électronique de régulation (85) implantée dans le projecteur.

10. Projecteur selon la revendication 9, **caractérisé en ce que** la carte électronique comporte un composant MOS intelligent (88).

11. Projecteur selon la revendication 7, **caractérisé en ce que** les moyens (8) d'alimentation de la source lumineuse comportent un contrôleur d'éclairage (94) associé à une carte électronique de régulation (93) implantée dans le projecteur, ladite carte pouvant être commandée par des signaux logiques et/ou des messages transitant sous forme numérique sur un bus (96).

12. Projecteur selon la revendication 7 ou 11, **caractérisé en ce que** les moyens (8) d'alimentation de la source lumineuse comportent un contrôleur d'éclairage (94) associé à une carte électronique de régulation (93) implantée dans le projecteur, ladite carte pouvant être commandée par des messages transitant sous forme numérique sur un bus (96) autorisant une modification dynamique des première et seconde tensions aux bornes de la source lumineuse en fonction de différents profils de mission.

13. Véhicule automobile, **caractérisé en ce qu'**il comporte un projecteur selon l'une quelconque des revendications 7 à 12.

**Fig. 1**

| | Luminance à 12,8 V | Luminance à 13,2 V | Durée vie à 13,2 V | Luminance à 11,78 V | Durée vie à 11,78 V |
|---|---|---|---|---|---|
| H7LL | 2 150 | 2 350 | 700 | | |
| H9 | 3 150 | 3 400 | 250 | 2 350 | 4,38 x 250 = 1 095 |

**Fig. 2**

**Fig. 3**

**Fig. 4A**

| $V_{Route}$ \ $V_{Code}$ | "0" | "1" |
|---|---|---|
| $V_{Alim}$ | $V_{Lampe} = V_{Alim}$ | $V_{Lampe} = V_{PWM_C}$ |
| $PWM_R$ | $V_{Lampe} = V_{PWM_R}$ | $V_{Lampe} = V_{PWM_C}$ |

**Fig. 4B**

89

$V_{Alim}$

92

Body
controller

$V_{Route}$ "1" "0"

$V_{Code}$ "1" "0"

μ.C

88

4

91    90

10

| $V_{Route}$ \ $V_{Code}$ | "0" | "1" |
|---|---|---|
| "0" | $V_{Lampe}$ = 0 | $V_{Lampe}$ = $V_{PWM_C}$ |
| "1" | $V_{Lampe}$ = $V_{Alim}$ ou $V_{PWM_R}$ | N.A |

# Fig. 4C

89

$V_{Alim}$

94

Body
controller

96

μ.C

88

$PWM_R$ ou
$PWM_C$

95    93

10

# Fig. 4D

**Europäisches Patentamt**
**European Patent Office**
**Office européen des brevets**

## RAPPORT DE RECHERCHE EUROPEENNE

Numéro de la demande

EP 09 15 2641

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 997 162 A (ENGLISH GEORGE J [US] ET AL) 7 décembre 1999 (1999-12-07) | 1-6 | INV. B60Q1/14 |
| Y | * abrégé; revendications 5,7 * ----- | 7-13 | F21V14/08 H05B37/02 |
| Y | EP 1 177 939 A (FORD MOTOR CO [US]) 6 février 2002 (2002-02-06) * figures 4c,4d * ----- | 7-13 | H05B39/04 |
| A | EP 1 477 732 A (VALEO VISION [FR]) 17 novembre 2004 (2004-11-17) * alinéa [0003]; figure 1 * ----- | 1-13 | |

**DOMAINES TECHNIQUES RECHERCHES (IPC)**

B60Q
F21V
H05B

Le présent rapport a été établi pour toutes les revendications

| Lieu de la recherche | Date d'achèvement de la recherche | Examinateur |
|---|---|---|
| Munich | 25 mars 2009 | Boudet, Joachim |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 15 2641

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-03-2009

| Document brevet cité au rapport de recherche | | Date de publication | Membre(s) de la famille de brevet(s) | | Date de publication |
|---|---|---|---|---|---|
| US 5997162 | A | 07-12-1999 | CA | 2259888 A1 | 13-09-1999 |
| | | | EP | 0942454 A2 | 15-09-1999 |
| | | | HU | 9900595 A2 | 28-10-1999 |
| | | | JP | 11312495 A | 09-11-1999 |
| EP 1177939 | A | 06-02-2002 | DE | 60037185 T2 | 02-10-2008 |
| EP 1477732 | A | 17-11-2004 | FR | 2854941 A1 | 19-11-2004 |
| | | | JP | 2004342615 A | 02-12-2004 |
| | | | US | 2004228137 A1 | 18-11-2004 |

EPO FORM P0460

Pour tout renseignement concernant cette annexe : voir Journal Officiel de l'Office européen des brevets, No.12/82